# EUROPEAN PATENT APPLICATION

(11) **EP 1 231 187 A1**
(43) Date of publication of application: **14.08.2002**
(21) Application number: 02075436.2
(22) Date of filing: 04.02.2002
(51) Int. Cl.: C03B 11/08, C03B 11/12

(54) **Apparatus and method for molding glass optical elements**

(30) Priority: 13.02.2001 US 782325
(71) Applicant: EASTMAN KODAK COMPANY, Rochester, New York 14650 (US)
(72) Inventor: Rees, Clive M., EASTMAN KODAK COMPANY, Rochester, New York 14650-2201 (US); Ludington, Paul D., EASTMAN KODAK COMPANY, Rochester, New York 14650-2201 (US); Sadlik, Craig A., EASTMAN KODAK COMPANY, Rochester, New York 14650-2201 (US); Budinski, Michael K., Eastman Kodak Company, Rochester, New York 14650-2201 (US); Nelson, Jayson J., Eastman Kodak Company, Rochester, NewYork 14650-2201 (US); McLaughlin, Paul O., Eastman Kodak Company, Rochester, New York 14650-2201 (US)
(74) Representative: Nunney, Ronald Frederick Adolphe

(57) **Abstract**

A method and apparatus are taught for molding glass lens elements (30) from glass preforms (24). A glass preform (24) is placed on a first mold surface (22) of a first mold element (14) which resides in a first sleeve segment (18). The temperature of the glass preform (24), the first mold element (14), the first sleeve segment (18), a second mold element (12), and a second sleeve segment (16) are elevated to at least the glass transition temperature of the glass preform (24), the second mold element (12) residing in the second sleeve segment (16). The second mold element (12) and second sleeve segment (16) are moved toward the first mold element (14) and first sleeve segment (18) to form a mold cavity, the mold cavity including a lens chamber and an annular channel (34) projecting from the lens chamber. The glass preform (24) is compressed in the mold cavity to form a glass lens element (30) with the excess glass from the glass preform (24) flowing into the annular channel (34).

## Description

The present invention relates generally to the molding of optical glass elements and, more particularly, to methods and apparatus for molding optical glass lenses with diameters less than about two millimeters.

Various methods and apparatus for the compression molding of glass optical elements are known in the prior art. With these methods and apparatus, optical element preforms sometimes referred to as gobs are compression molded at high temperatures to form glass lens elements. The basic process and apparatus for molding glass elements is taught in a series of patents assigned to Eastman Kodak Company. Such patents are U.S. Patent No. 3,833,347 to Engle et al., U.S. Patent No. 4,139,677 to Blair et al., and U.S. Patent No. 4,168,961 to Blair. These patents disclose a variety of suitable materials for construction of mold inserts used to form the optical surfaces in the molded optical glass elements. Those suitable materials for the construction of the molds include glasslike or vitreous carbon, silicon carbide, silicon nitride, and a mixture of silicon carbide and carbon. In the practice of the process described in such patents, a glass preform or gob is inserted into a mold cavity with the mold being formed out of one of the above mentioned materials. The molds reside within a chamber in which is maintained a non-oxidizing atmosphere during the molding process. The preform is then heat softened by increasing the temperature of the mold to thereby bring the preform up to a viscosity ranging from 10⁷-10⁹ poise for the particular type of glass from which the preform has been made. Pressure is then applied to force the preform to conform to the shape of the mold cavity. The mold and preform are then allowed to cool below the glass transition temperature of the glass. The pressure on the mold is then relieved and the temperature is lowered further so that the finished molded lens can be removed from the mold.

There are many applications where it is desirable to mold a glass optical lens such that the outside diameter of the lens is concentric with the optical axis of the lens. The deviation of the distance from the outer radial surface of a lens to the optical axis of the lens is called runout. If the lens is later assembled in a barrel, it is desirable to have the runout minimized, such that the optical axis of the lens is collinear with the axis of the barrel.

The ability to control the outside diameter and runout is especially useful when the shape of the lens is cylindrical (with a length to diameter ratio > 1), or when the diameter of the lens is less than about 2 mm. It is particularly difficult to precisely grind the outside diameter of a lens when the diameter of the lens is less than about 2 millimeters, when the ratio of lens length to diameter is greater than 1, when one optical surface is plano, or when the plano surface is inclined at an angle not perpendicular to the optical axis.

Traditionally in molding glass lenses, the outside diameter of a glass-molded lens is not constrained. In this case, a glass preform is placed on the lower mold. The mold is heated until the glass is soft, and the two molds are pressed together. Any excess glass material is allowed to freely flow beyond the desired diameter of the lens. The mold is then cooled and the molds are separated to produce a finished molded lens. The variation in the outside diameter from lens to lens is proportional to the variation in the volume of the preforms that are used to mold the lenses. To produce finished molded lenses with very tight tolerances on the outside diameter requires very tight control of the preform volume.

It is also possible to perform a secondary operation whereby the excess glass is ground off to produce a lens with a very tight tolerance runout and outside diameter tolerances. There are disadvantages in performing this secondary operation including increased cost, difficulty in cleaning the finished part, and possible scratching of the optical surfaces.

It would be very desirable to mold a lens without having to either precisely control the preform volume or grind off the excess glass material along the entire diameter of the lens. Prior art attempts to precisely control the diameter of the molded glass lens, have typically involved constraining the glass preform in a unitary cylindrical sleeve having an interior diameter that equals the desired outside diameter of the lens to be molded therewith. U.S. Patent Nos. 5 718 850 to Takano et al., 5 227 917 to Kubo et al., and 4 629 489 to Hirota et al., all teach methods and apparatus which include constraining the glass preform in a unitary cylindrical sleeve. However, constraining the glass preform in a unitary cylindrical sleeve having an interior diameter that equals the desired outside diameter of the lens to be molded therewith requires very tight control over the volume of each and every preform, which dramatically increases the price of the preforms. Further, although a unitary cylindrical mold sleeve produces a lens with a well-constrained outer diameter, molding tool life can be decreased due to a variety of factors. If the preform volume is even slightly larger than the mold cavity, the excess glass can result in the exertion of excessive force on the cylindrical sleeve during molding. Furthermore, repeated glass pressing operations tend to degrade the surface quality inside the bore, leading to increased probability of the lens sticking in the unitary cylindrical sleeve after multiple molding cycles. Maintaining control of the inner diameter of a unitary cylindrical mold sleeve bore that is only about 2 mm in diameter is difficult. Therefore, in a unitary cylindrical mold sleeve type of molding operation, the variability of preform volume must be controlled very precisely to reduce potential stresses that might damage the sleeve.

It is therefore an object of the present invention to provide a method and apparatus for molding cylindrical glass lenses which precisely controls the diameter of glass lenses during molding.

It is a further object of the present invention of the present invention to provide a method and apparatus for molding cylindrical glass lenses with precisely controlled diameters that allows for some variability of preform volume.

Yet another object of the present invention is to provide a method and apparatus for molding cylindrical glass lenses which ensures that cylindrical axis of the lens is substantially collinear with the optical axis of the lens.

Briefly stated, these and numerous other features, objects and advantages of the present invention will become readily apparent upon a reading of the detailed description, claims and drawings set forth herein. These features, objects and advantages are accomplished by using a split sleeve configuration to precisely control the outside diameter and runout of the finished lens without the need to precisely control the volume of the preform. Upper and lower molds are supported, respectively, in upper and lower sleeve segments. Upper and lower molds each include a negative of the desired optical surfaces to be imparted thereby. In the molding operation, a glass preform with an optical quality surface is inserted into the lower mold sleeve on top of the lower mold. The glass preform used in the apparatus is preferably cylindrical with spherical ends. The spherical ends would have optical quality surfaces. The temperature of the upper and lower molds, upper and lower sleeve segments, and preform is raised to at least the glass transition temperature of the preform. Then the preform is pressed between the upper and lower molds and confined by the upper and lower mold sleeves causing the preform to deform to the shape of the mold cavity defined thereby. The mold cavity includes a primary or lens chamber and an annular channel projecting therefrom. Compression is performed and the optical mold surfaces of the upper and lower molds are imparted to the preform creating a lens. The upper and lower molds and the lens are allowed to cool to below the glass transition temperature and, preferably, to below the annealing point of the glass. At that point, the upper and lower molds and the upper and lower mold sleeve segments can be separated, and the lens can be removed from the molding apparatus. The annular channel projecting from the primary or lens chamber is positioned proximate to where upper and lower mold sleeves abut one another when in molding position. That is, the annular channel is positioned at the perimetric interface between the upper and lower mold sleeve segments. The perimetric interface may be positioned such that it is at the top or bottom of the annular channel, or anywhere in between. During the molding operation, that portion of the volume of the preform that is greater than the volume of the lens chamber flows into the annular channel. The annular channel allows for the volume of the preform to be somewhat larger than the volume of the lens chamber portion of mold cavity. In this manner, a lens can be formed with a generally cylindrical shape while avoiding putting too much pressure on upper and lower sleeves during molding operation. In other words, the annular channel provides a reservoir into which excess glass can flow. Thus, method and apparatus of the present invention allows for controlled glass flash on the molded lenses. The excess glass that flows into the annular channel can be subjected to a subsequent grinding operation and removed thereafter.

Figure 1 is a cross-sectional schematic view of an apparatus with a preform positioned therein at the beginning of a molding sequence.

Figure 2a is a cross-sectional schematic view showing the apparatus of Figure 1 actuated to compress the preform to yield an exemplary molded lens.

Figure 2b is a cross-sectional schematic view showing the apparatus of Figure 1 actuated to form the mold cavity without a preform present.

Figure 3 is a cross-sectional schematic view showing the apparatus of Figures 1 and 2 actuated to release the exemplary molded lens.

Figure 4 is side-elevational view of the exemplary lens as formed in the apparatus of Figure 3.

Figure 5 is a cross-sectional schematic view of an alternative embodiment to the apparatus shown in Figures 1 through 3 with the mold sleeve segments in the open or separated position.

Figure 6 is a cross-sectional schematic view of the apparatus shown in Figure 5 with the mold sleeve segments in the closed or molding position.

Figure 7 is side-elevational view of the exemplary lens as formed in the apparatus of Figures 5 and 6.

Figure 8 is a cross-sectional schematic view of another alternative embodiment to the apparatus shown in Figures 5 and 6.

Figure 9 is side-elevational view of the exemplary lens as formed in the apparatus of Figure 8.

Figure 10 is a cross-sectional schematic view of another alternative embodiment to the apparatus shown in Figures 1 through 3 with the mold sleeve segments in the open or separated position.

Figure 11 is a cross-sectional schematic view of the apparatus shown in Figure 10 with the mold sleeve segments in the closed or molding position.

Figure 12 is a cross-sectional schematic view showing the apparatus of Figures 10 and 11 actuated to release the exemplary molded lens.

Figure 13 is a cross-sectional view of the exemplary lens as formed in the apparatus of Figures 10 through 12.

Figure 14 is a cross-sectional view of an optical subassembly including two of the lenses shown in Figure 13, bonded to an intermediate optical component.

Figure 15 shows yet another alternative apparatus similar to the apparatus depicted in Figures 10 through 12.

Figure 16 is a cross-sectional view of the exemplary lens as formed in the apparatus of Figure 15.

Figure 17 is a cross-sectional schematic view of an apparatus of the present invention for simultaneously molding a plurality of lenses with the upper and lower sleeve segments shown in the open position.

Figure 18 is a cross-sectional schematic view of the apparatus of Figure 17 with the upper and lower sleeve segments shown in the closed or molding position.

Figure 19 is a top plan view of the mold sleeve of the apparatus shown in Figures 17 and 18.

Figure 20 is a schematic depiction of one technique for grinding off excess glass (controlled flash) of a lens formed with the method and apparatus of the present invention.

Figure 21 is a perspective view of an apparatus for holding and carrying a plurality of lenses formed with the method and apparatus of the present invention.

Figure 22 is a cross-sectional view taken along line 22 - 22 of Figure 21.

Figure 23 is a side elevational view of a finished lens after the excess glass has been ground off such as by the apparatus depicted in Figure 20.

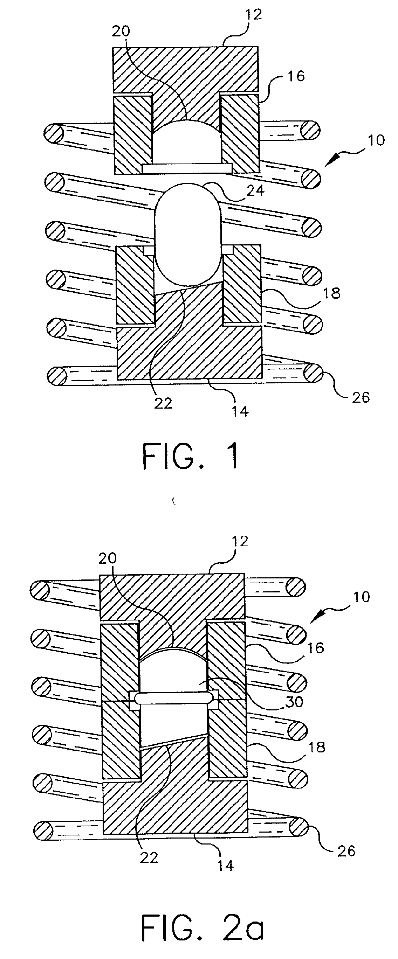

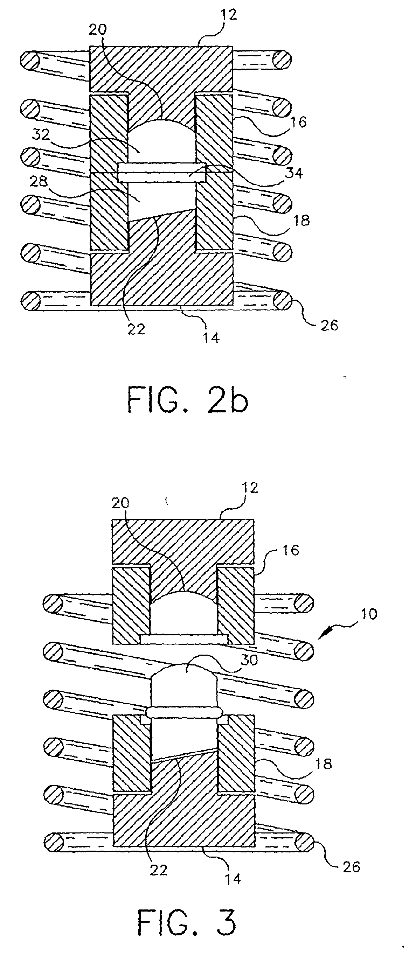

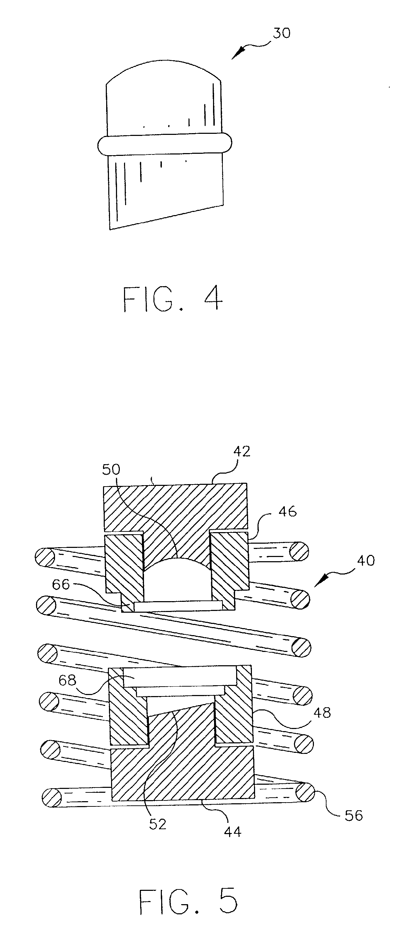

Turning first to Figures 1 through 3, there is shown a cross-sectional view of the apparatus 10 of the present invention depicting a molding sequence for molding glass lenses. Apparatus 10 includes an upper mold 12 and a lower mold 14. Upper mold 12 resides in an upper mold sleeve segment 16 and lower mold 14 resides in a lower mold sleeve segment 18. The upper mold 12 includes a first optical mold surface 20. First optical mold surface 20 is depicted as being concave but may include other optical geometries such as convex or piano features. The lower mold 14 includes a second optical mold surface 22. Second optical mold surface 22 is depicted as being piano but may include other optical geometries such as convex or concave features. The second optical mold surface 22 is shown at an angle not perpendicular to the central axis of the lower mold 14, however the piano surface 22 may be perpendicular to the central axis of lower mold 14. In the operation of apparatus 10 a glass preform 24 with an optical quality surface is inserted into the lower mold sleeve 18 and on top of lower mold 14. The glass preform 24 used in the apparatus 10 as depicted is preferably cylindrical with spherical ends. The spherical ends would have optical quality surfaces. Through actuation of an induction heating coil 26 or other heating means, the temperature of the upper and lower molds 12, 14 and preform 24 is raised to at least the glass transition temperature of the preform 24. Then the preform 24 is pressed between the upper and lower molds 12, 14 and confined by the upper and lower mold sleeve segments 16, 18. The preform 24 is thereby caused to deform to the shape of the mold cavity 28 defined by the upper and lower molds 12, 14 and the upper and lower mold sleeve segments 16, 18 with the upper and lower mold sleeve segments 16, 18 residing in abutting position at a perimetric (cylindrical) interface. In this manner, the first and second optical surfaces 20, 22 are imparted to the preform 24 yielding lens 30 (See Figure 4). Compression is performed (by means not shown) to a positive stop at which point the molds 14, 12 and the lens 30 are allowed to cool to below the glass transition temperature and preferably to below the annealing point of the glass. At that point, upper and lower molds 12, 14 and upper and lower mold sleeves 16, 18 can be separated and lens 30 can be removed. Mold cavity 28 includes a primary or lens chamber 32 and an annular channel 34 projecting therefrom into upper and lower mold sleeves 16, 18 proximate to where upper and lower mold sleeves 16, 18 abut one another when brought together to form mold cavity 28. Annular channel 34 allows for the volume of the preform 24 to be somewhat larger than the volume of the primary or lens chamber 32. In this manner, lens 30 can be formed with a generally cylindrical shape while avoiding putting too much pressure on upper and lower sleeves 16, 18 during the molding operation. In other words, annular channel 34 provides a reservoir into which excess glass can flow. The excess glass that flows into annular channel 34 can be subjected to a subsequent grinding operation and removed thereafter.

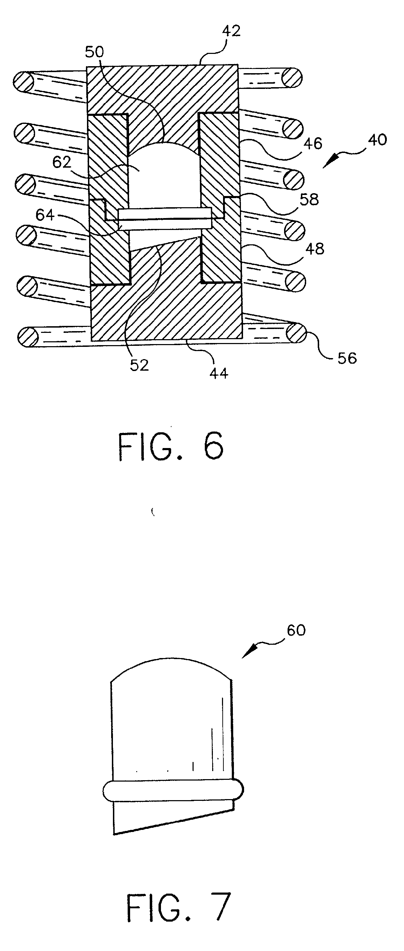

Looking next at Figures 5 and 6, there is shown an apparatus 40 which is an alternative embodiment to the apparatus 10 shown in Figures 1 through 3. Operation of apparatus 40 is substantially identical to the operation of apparatus 10. Apparatus 40 includes an upper mold 42 and a lower mold 44. Upper mold 42 resides in an upper mold sleeve 46 and lower mold 44 resides in a lower mold sleeve 48. The upper mold 42 includes a first optical mold surface 50. First optical mold surface 50 is depicted as being concave but may include other optical geometries such as convex or plano features. The lower mold 44 includes a second optical mold surface 52. Second optical mold surface 52 is depicted as being plano but may include other optical geometries such as convex or concave features. In the operation of apparatus 40 a glass preform (not shown) with an optical quality surface is inserted into the lower mold sleeve 48 and on top of lower mold 44. The glass preform used in the apparatus 40 is preferably cylindrical with spherical ends as depicted with reference to Figure 1. The spherical ends would have optical quality surfaces. Through actuation of an induction heating coil 56 or other heating means, the temperature of the upper and lower molds 42, 44 and preform is raised to at least the glass transition temperature of the preform. Then the preform is pressed between the upper and lower molds 42, 44 and confined by the upper and lower mold sleeves 46, 48 causing the preform to deform to the shape of the mold cavity 58 defined thereby. In this manner, the first and second optical surfaces 50, 52 are imparted to the preform yielding lens 60 (See Figure 7). Compression is performed (by means not shown) to a positive stop at which point the molds 42, 44 and the lens 60 are allowed to cool to below the glass transition temperature and preferably to below the annealing point of the glass. At that point, upper and lower molds 42, 44 and upper and lower mold sleeves 46, 48 can be separated and lens 60 can be removed. Mold cavity 58 includes a primary or lens chamber 62 and an annular channel 64 projecting therefrom into upper and lower mold sleeves 46, 48 proximate to where upper and lower mold sleeves 46, 48 abut one another when in molding brought together to form mold cavity 58. Annular channel 64 allows for the volume of the preform to be somewhat larger than the volume of the primary or lens chamber 62. In this manner, lens 60 can be formed with a generally cylindrical shape while avoiding putting too much pressure on upper and lower sleeves 46, 48 during the molding operation. In other words, annular channel 64 provides a reservoir into which excess glass can flow. The excess glass that flows into annular channel 64 can be subjected to a subsequent grinding operation and removed thereafter. When upper and lower mold sleeves 46, 48 are brought together in the molding position as depicted, there is a telescoping or interlocking fit. Upper mold sleeve 46 includes an extending or male portion 66 which is cylindrical and has a reduced outside diameter as compared to the remaining portion of upper mold sleeve 46. Male portion 66 is received in female portion 68 of lower mold sleeve 48. The inside diameter of female portion 68 is designed to closely fit with the outside diameter of male portion 66 to yield this interlocking or telescoping fit. That planar portion of the seam formed between the upper mold sleeve 46 and the lower mold sleeve 48 that actually intersects the annular channel 64 may be thought of as a perimetric interface.

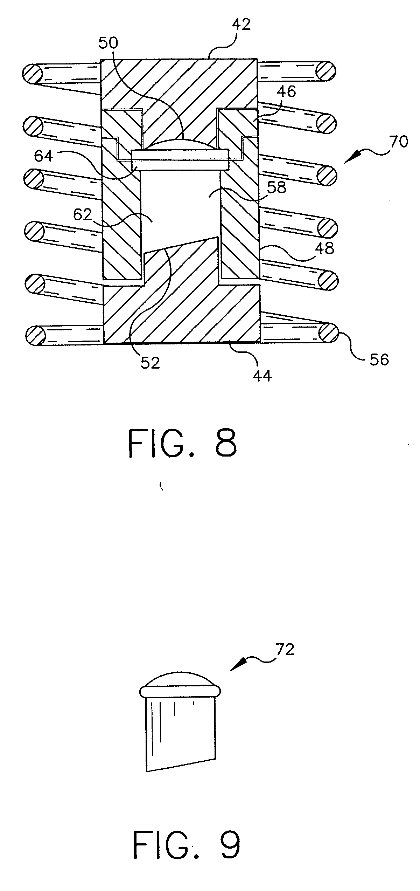

As shown in Figure 5, upper and lower sleeves 46, 48 interface with one another proximate to lower mold 44. However, the interface between upper and lower sleeves 46, 48 and the annular channel 64 at such interface can be positioned anywhere between first and second optical mold surfaces 50, 52. This is demonstrated in Figure 8 which shows an apparatus 70 which is essentially identical to apparatus 40. Therefore, for purposes of simplicity, the elements of apparatus 70 are numbered identically to the elements of apparatus 40. The only difference between apparatus 40 and apparatus 70 is the positioning of the interface between upper and lower sleeves 46, 48 and the annular channel 64. In apparatus 70 the interface and the annular channel 64 are located proximate the upper mold 42. This results in the molding of an exemplary glass lens 72 as depicted in Figure 9. Once again, the excess glass that flows into annular channel 64 can be subjected to a subsequent grinding operation and removed thereafter.

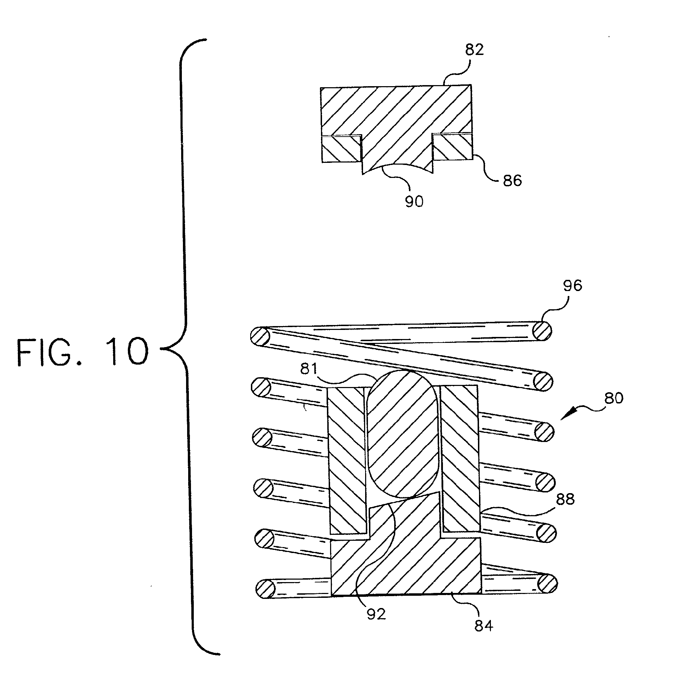

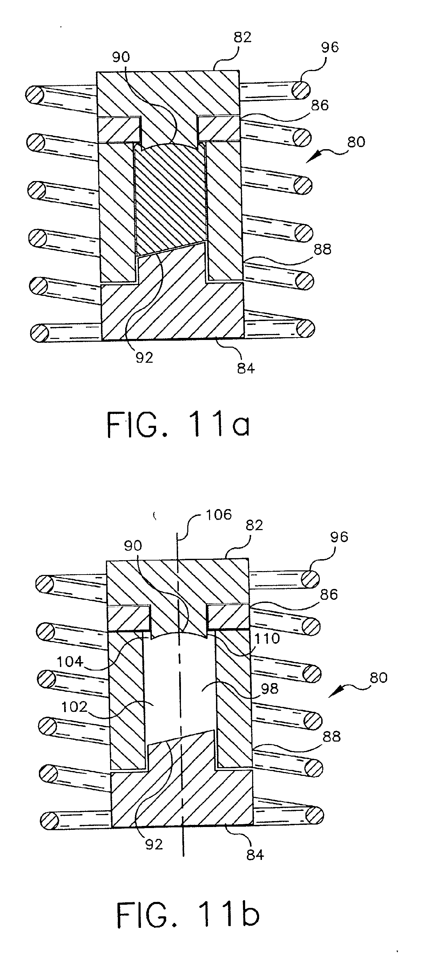

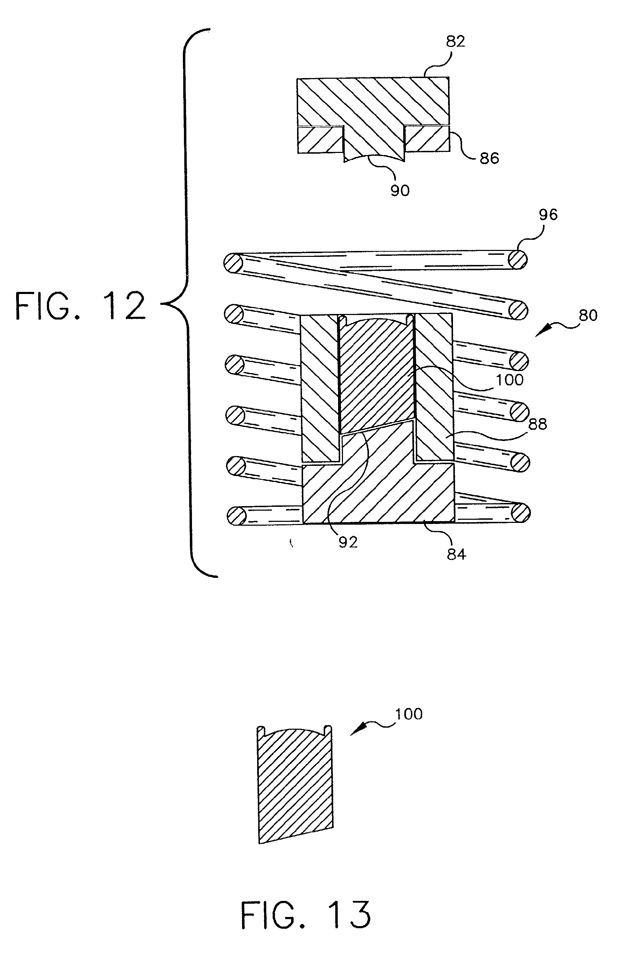

Looking next at Figures 10 through 12, there is shown a molding sequence for an apparatus 80 which is an alternative embodiment to the apparatus 10, 40, 70 discussed above. Operation of apparatus 80 is substantially identical to the operation of apparatus 10. Apparatus 80 includes an upper mold 82 and a lower mold 84. Upper mold 82 resides in an upper mold sleeve 86 and lower mold 84 resides in a lower mold sleeve 88. The upper mold 82 includes a first optical mold surface 90. First optical mold surface 90 is depicted as being concave but may include other optical geometries such as convex or plano features. The lower mold 84 includes a second optical mold surface 92. Second optical mold surface 92 is depicted as being plano but may include other optical geometries such as convex or concave features. In the operation of apparatus 80 a glass preform 81 with an optical quality surface is inserted into the lower mold sleeve 88 and on top of lower mold 84. The preferred glass preform used in the apparatus 80 is preferably cylindrical with spherical ends as depicted with reference to Figure 1. The spherical ends would have optical quality surfaces. Through actuation of an induction heating coil 96 or other heating means, the temperature of the upper and lower molds 82, 84 and preform 81 is raised to at least the glass transition temperature of the preform 81. Then the preform 81 is pressed between the upper and lower molds 82, 84 and confined by the upper and lower mold sleeves 86, 88 causing the preform 81 to deform to the shape of the mold cavity 98 defined thereby. In this manner, the first and second optical surfaces 90, 92 are imparted to the preform yielding lens 100 (See Figure 13). Compression is performed (by means not shown) to a positive stop at which point the molds 82, 84 and the lens 100 are allowed to cool to below the glass transition temperature and preferably to below the annealing point of the glass. At that point, upper and lower molds 82, 84 and upper and lower mold sleeves 86, 88 can be separated and lens 100 can be removed. Mold cavity 98 includes a primary or lens chamber 102 and an annular channel 104 projecting therefrom. Annular channel 104 is proximate to where upper and lower mold sleeves 86, 88 abut one another when in molding brought together to form mold cavity 98. Annular channel 104 projects longitudinally, that is, parallel to the cylindrical axis 106 of mold cavity 98. Annular channel 104 is therefore defined by the gap between the cylindrical surface 110 of upper mold 82 and the interior cylindrical surface of lower mold sleeve 88. Annular channel 104 allows for the volume of the preform 81 to be somewhat larger than the volume of the primary or lens chamber 102. In this manner, lens 100 can be formed with a generally cylindrical shape while avoiding putting too much pressure on upper and lower sleeves 86, 88 during the molding operation. In other words, annular channel 104 provides a reservoir into which excess glass can flow. The seam formed between the upper mold sleeve 86 and the lower mold sleeve 88 that intersects the annular channel 104 may be thought of as a perimetric interface. Thus, the annular channel 104 is formed at the perimetric interface between the upper mold sleeve 86 and the lower mold sleeve 88.

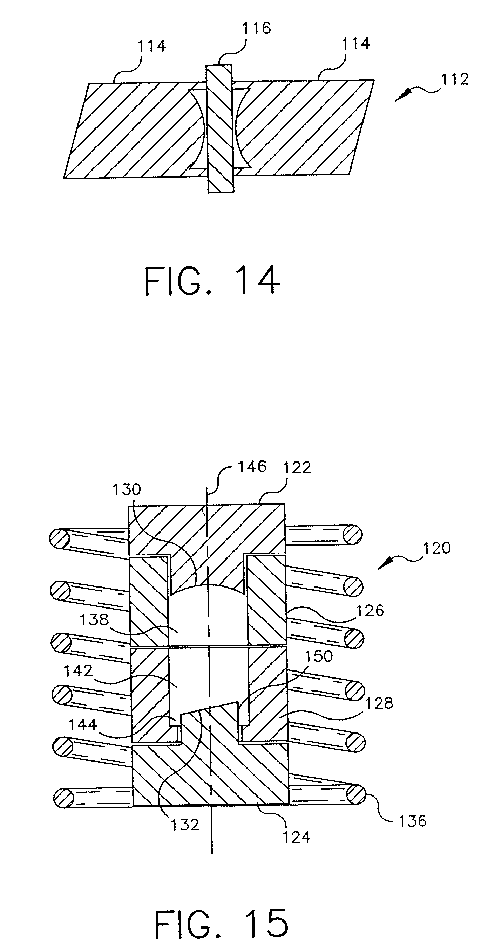

The excess glass that flows into annular channel 104 can be subjected to a subsequent grinding operation and completely removed thereafter. Alternatively, much of the excess glass can remain and be used as a mounting surface for building an optical subassembly. By grinding off the top of the excess material, it is possible to produce a flat mounting surface. With such a configuration, it may be necessary to cement the end of the lens to an additional component, such as an optical filter. An exemplary subassembly 112 is shown in Figure 14 where two lenses 114 as produced by apparatus 80 are each bonded to an intermediate optical component 116. To improve bonding and alignment of the two lenses 114 with the intermediate optical component 116, the excess material at the top of the lens may be ground off flat.

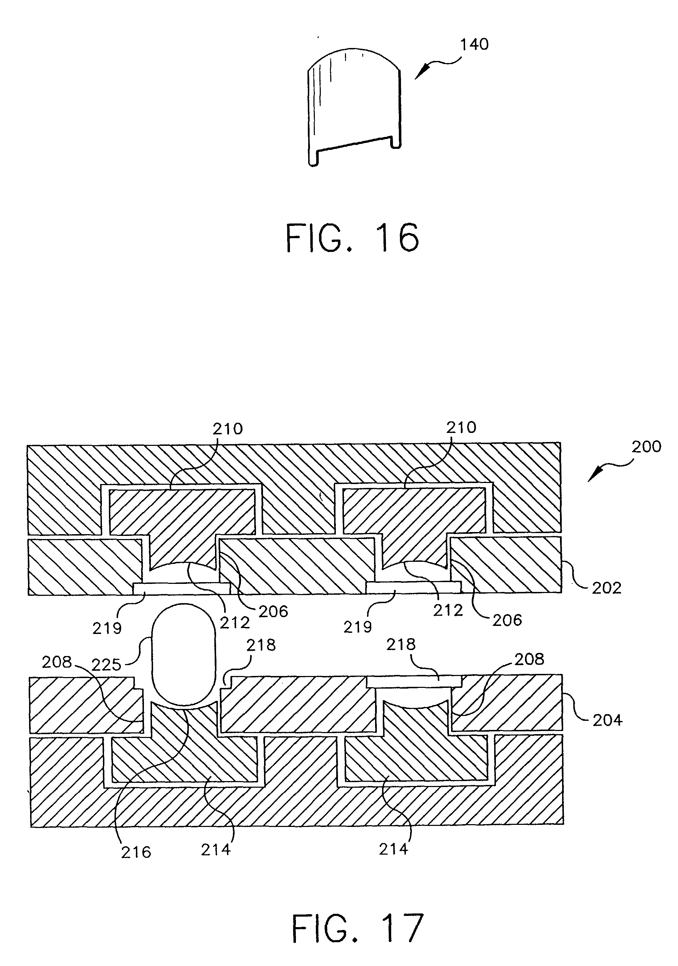

Turning to Figure 15 there is shown in another alternative apparatus 120 similar to the apparatus 80 depicted in Figures 10 through 12. Operation of apparatus 120 is substantially identical to the operation of apparatus 80. Apparatus 120 includes an upper mold 122 and a lower mold 124. Upper mold 122 resides in an upper mold sleeve 126 and lower mold 124 resides in a lower mold sleeve 128. The upper mold 122 includes a first optical mold surface 130. First optical mold surface 130 is depicted as being concave but may include other optical geometries such as convex or plano features. The lower mold 124 includes a second optical mold surface 132. Second optical mold surface 132 is depicted as being plano but may include other optical geometries such as convex or concave features. In the operation of apparatus 120 a glass preform (not shown) with an optical quality surface is inserted into the lower mold sleeve 128 and on top of lower mold 124. The glass preform used in the apparatus 120 is preferably cylindrical with spherical ends as depicted with reference to Figure 10. The spherical ends would have optical quality surfaces. Through actuation of an induction heating coil 136 or other heating means, the temperature of the upper and lower molds 122, 124 and preform is raised to at least the glass transition temperature of the preform. Then the preform is pressed between the upper and lower molds 122, 124 and confined by the upper and lower mold sleeves 126, 128 causing the preform to deform to the shape of the mold cavity 138 defined thereby. In this manner, the first and second optical surfaces 130, 132 are imparted to the preform yielding lens 140 (See Figure 16). Compression is performed (by means not shown) to a positive stop at which point the molds 122, 124 and the lens 140 are allowed to cool to below the glass transition temperature and preferably to below the annealing point of the glass. At that point, upper and lower molds 122, 124 and upper and lower mold sleeves 126, 128 can be separated and lens 140 can be removed. Mold cavity 138 includes a primary or lens chamber 142 and an annular channel 144 projecting therefrom. Annular channel 144 is proximate to the cylindrical surface 150 of lower mold 124. Annular channel 144 projects longitudinally, that is, parallel to the cylindrical axis 146 of mold cavity 138. Annular channel 144 is therefore defined by the gap between the cylindrical surface 150 of lower mold 124 and the interior cylindrical surface of lower mold sleeve 128. Annular channel 144 allows for the volume of the preform to be somewhat larger than the volume of the primary or lens chamber 142. In this manner, lens 140 can be formed with a generally cylindrical shape while avoiding putting too much pressure on upper and lower sleeves 126, 128 during the molding operation. In other words, annular channel 144 provides a reservoir into which excess glass can flow. The excess glass that flows into annular channel 144 can be subjected to a subsequent grinding operation and removed thereafter. The subsequent grinding operation will be more difficult if the plano surface is inclined at an angle not perpendicular to the central axis of lower mold 124.

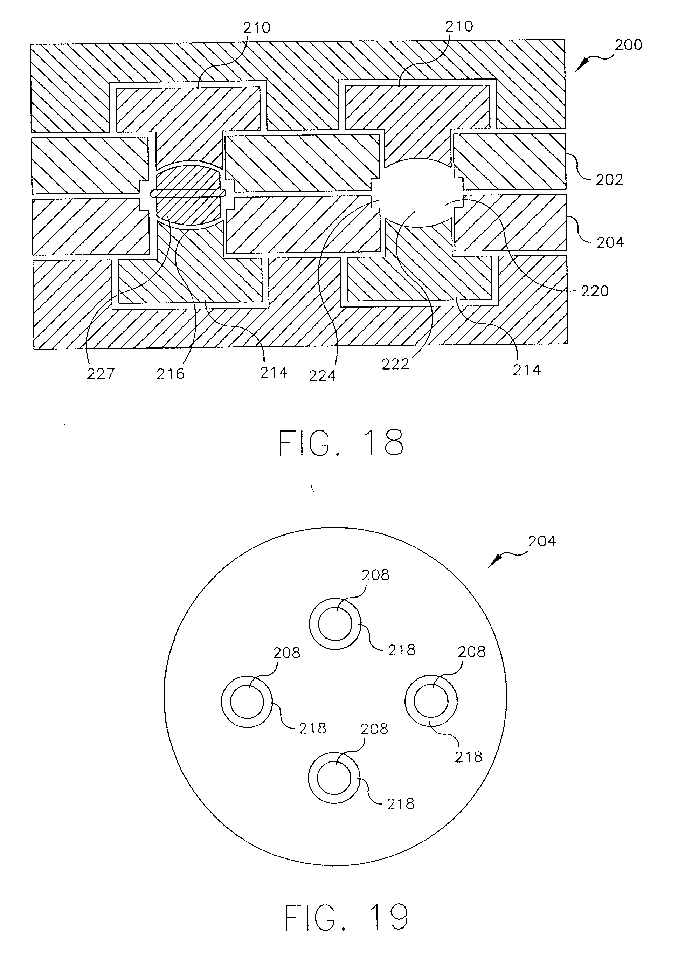

The method and apparatus of the present invention as discussed with reference to Figures 1 through 16, described the molding of individual lenses. However, as noted above, the method and apparatus of the present invention is particularly useful in molding lenses of small diameter on the order of 2 mm or less. When molding small diameter lenses it can be useful and cost effective to mold a plurality of such lenses in a single pressing operation rather than individually. An exemplary apparatus 200 for molding four lenses simultaneously is depicted in Figures 17, 18 and 19. Apparatus 200 includes an upper sleeve segment 202 and lower sleeve segment 204. Upper sleeve segment 202 includes four bores 206 therethrough, and lower sleeve segment 204 includes four bores 208 therethrough. Bores 206 align with bores 208. Residing in each bore 206 is an upper mold 210 which includes an optical mold surface 212. Optical mold surface 212 is depicted as being concave however such surface may also be configured to be plano or convex. Residing in each bore 208 is a lower mold 214 which includes an optical mold surface 216. Optical mold surface 216 is also depicted as being concave. Once again, however, such optical mold surface 216 may also be configured to be plano or convex. There is a recess 218 in the top surface of lower sleeve segment 204 surrounding each bore 208. Each recess 218 is concentric with a respective bore 208. There is a recess 219 in the bottom surface of upper sleeve segment 202 surrounding each bore 206. Each recess 219 is concentric with a respective bore 206.When the upper and lower sleeve segments 202, 204 and upper and lower molds 210, 214 are moved to form a plurality of mold cavities 220, each mold cavity 220 includes a lens chamber 222 and a radially extending annular channel 224. The glass preforms 225 used in the apparatus 200 are preferably cylindrical with spherical ends as depicted with reference to Figure 10. The spherical ends would have optical quality surfaces. Through actuation of an induction heating coil (not shown) or other heating means, the temperature of the upper and lower molds 210, 214, upper and lower sleeve segments 202, 204 and preforms 225 are raised to at least the glass transition temperature of the preforms 225. Then the preforms 225 are pressed between the upper and lower molds 210, 214 and confined by the upper and lower mold sleeves segments 202, 204 causing the preforms 225 to deform to the shape of the mold cavities 220 defined thereby. In this manner, the first and second optical surfaces 212, 216 are imparted to the preforms 225 yielding lenses 227. Compression is performed (by means not shown) to a positive stop at which point the molds 210, 214 and the lenses 227 are allowed to cool to below the glass transition temperature and preferably to below the annealing point of the glass. At that point, upper and lower molds 210, 214 and upper and lower mold sleeves segments 202, 204 can be separated and lenses 227 can be removed. Annular channels 224 allow for the volume of the preforms 225 to be somewhat larger than the volume of the primary or lens chamber 222. In this manner, a plurality of lenses 227 can be formed simultaneously, each with a generally cylindrical shape while avoiding putting too much pressure on upper and lower sleeve segments 202, 204 during the molding operation. In other words, annular channels 224 provide individual reservoirs into which excess glass can flow. The excess glass that flows into each annular channel 224 can be subjected to a subsequent grinding operation and removed thereafter.

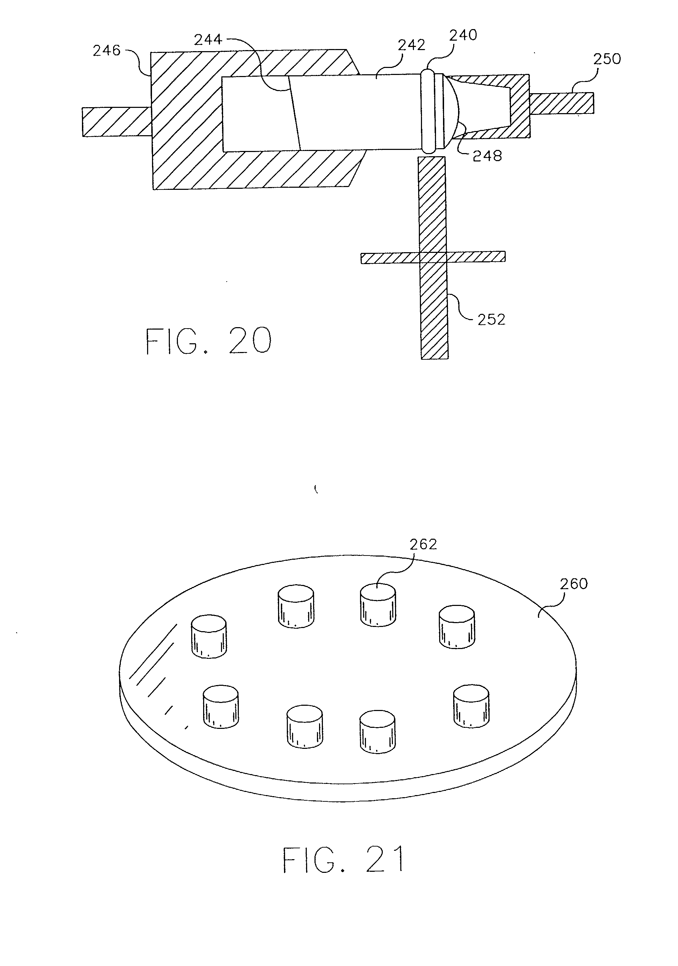

One possible technique for grinding off excess glass 240 (controlled flash) of a lens 242 formed with the method and apparatus of the present invention is shown in Figure 20. The outside diameter of the lens 242 toward the plano surface 244 is held in a collet 246 . The second optical surface 248 is held in a cup 250 that may be made out of a soft metal such as brass. A vacuum is applied within the cup 250, which forces the lens 242 against the cup surface. The collet 246 minimizes the side to side movement of the lens 242 during the grinding operation. The collet 246, cup 250 and lens 242 rotate. A rotating grinding wheel 252 is then used to remove the excess glass 240 below the outside diameter of the lens 242.

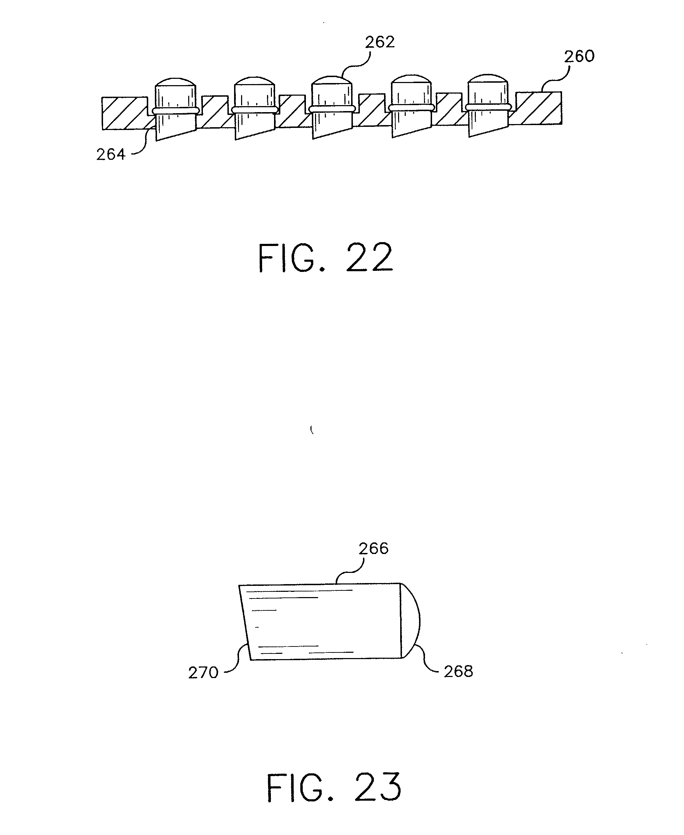

With respect to each of the methods and apparatus described herein which utilize a radially projecting annular channel to act as a reservoir for receiving excess glass, it is stated that such excess glass may be removed in a subsequent grinding operation. However, it is not required that the controlled flash or radially extending ring portion of the molded lens be removed. In fact, such a radially extending ring portion may have some advantage in both intermediate and finished lens handling and mounting operations, depending on the application. The controlled flash can be used to hold the lens during the manufacturing process. It is difficult to handle small parts such as optical lenses. This is particularly true when the diameter of the lenses is less than 2 mm. Therefore, the controlled flash can be very advantageous for very small lenses (< 2 mm diameter) that need to be cleaned or coated, such as with an antireflection coating. To reduce the manufacturing costs, it is desirable to fabricate as many lenses as possible during each molding cycle. By using a multi-cavity carrier 260 as shown in Figures 21 and 22, small lenses 262 can easily be handled during manufacturing operations such as cleaning and coating. The excess glass flash 264 can be used to hold the lenses 262 in the carrier 260. The number and pattern of the lenses in the carrier 260 can vary depending on the size of the lenses, mold construction, and other factors. In this case, eight lenses are shown in a radial pattern. After optical coating, the lenses 262 would be removed from the carrier 260 and preferably, the excess glass material 264 would be removed. Additionally, the controlled flash or radially extending ring portion of the molded lens could be used for attachment to a lens barrel by injection molding a plastic lens barrel about the controlled flash portion of the lens.

From the foregoing it is clear that the split-sleeve mold configuration used in the method and apparatus of the present invention has many advantages over the prior art mold configurations. As noted above, the present invention allows for greater variation in the size of the preforms. The allowed larger variation in size of the preform reduces the cost of the preform. Further, the split-sleeve configuration allows for easier placement of the preform into the molding apparatus, since the length of the sleeve into which the preform must fit can be reduced. The split sleeve configuration also allows for easier removal of the finished lens after molding. If the lens is molded completely within one sleeve, it is more likely to stick in the sleeve and hence be difficult to remove.

In that embodiment of the present invention where the upper and lower sleeves have an interlocking or telescoping fit, the upper and lower sleeve segments will be well aligned to each other, thereby improving the accuracy with which the lens can be mounted. Furthermore, if the upper and lower sleeve segments are interlocking, there would be expected an improvement in the relative alignment of the upper and lower mold surfaces during pressing. Misalignment of the optical surface of a lens can reduce the optical performance of the lens.

### Example

An exemplary lens of the present invention similar to that depicted in Figure 9 was successfully molded from Hoya TaC-4 glass. The lens 72 produced was a plano-convex collimator lens intended to be used in passive optical fiber components. The plano optical surface was inclined by approximately 8° from being perpendicular to the cylindrical axis to reduce back reflections into the transmitting optical fiber. An aspheric optical surface was integrally molded at the opposite end of the lens. The purpose of the aspheric optical surface is to collimate the optical beam. The apparatus used to form the lens 72 was similar to that depicted in Figure 8. A cylindrical preform 24 with spherical ends (shown in Figure 1) was placed into the mold and heated to approximately 720° C. The cylindrical preform 24 was then compressed between upper and lower molds 42, 44 for approximately 20 seconds and then cooled. Once the upper and lower molds 42, 44 were separated, the molded lens 72 was removed and placed in a plastic tray. Subsequent to molding, the aspheric and plano surfaces of lens 72 were coated with an anti-reflection coating optimized at 1550 nm. Following this, the excess glass was removed using an optical lens centering machine similar to the apparatus shown in Figure 20. A collet 246 and a centering cup 250 were used remove the excess glass 240 from the molded lens. Such a grinding operation resulted in a finished lens 266 (see Figure 23) including a convex optical surface 268 and a plano optical surface 270.

From the foregoing it will be seen that this invention is one well adapted to attain all of the ends and objects hereinabove set forth together with other advantages which are apparent and which are inherent to the process.

## Claims

1. An apparatus for molding glass lens elements from glass preforms comprising:
(a) a first mold element supported in a first sleeve segment;
(b) a second mold element residing in a second sleeve segment, the first sleeve segment and the first mold element being movable toward the second sleeve segment and second mold element; and
(c) a mold cavity defined by the first mold element, the second mold element, the first sleeve segment, and the second sleeve section when the first sleeve segment is moved to abut the second sleeve segment, the mold cavity including a lens chamber and an annular channel projecting from the lens chamber.

2. An apparatus as recited in claim 2 wherein:
the annular channel projects radially from the lens chamber.

3. An apparatus as recited in claim 2 wherein:
the annular channel projects in an axial direction from the lens chamber.

4. An apparatus as recited in claim 2 wherein:
the annular channel is located at a perimetric interface between the first and second sleeve segments.

5. An apparatus as recited in claim 2 further comprising:
means for heating the preform, the upper and lower mold sleeve segments and the upper and lower molds to at least a glass transition temperature of the preform.

6. A method for molding glass lens elements comprising the steps of:
(a) placing a glass preform on a first mold surface of a first mold element, the first mold element residing in a first sleeve segment;
(b) elevating the temperature the glass preform, the first mold element, the first sleeve segment, a second mold element, and a second sleeve segment to at least a glass transition temperature of the glass preform, the second mold element residing in the second sleeve segment;
(c) moving the second mold element and second sleeve segment toward the first mold element and first sleeve segment to form a mold cavity, the mold cavity including a lens chamber and an annular channel projecting from the lens chamber;
(d) compressing the glass preform in the mold cavity to form a glass lens element; and
(e) flowing excess glass from the glass preform into the annular channel.

7. A method as recited in claim 16 wherein:
the excess glass from the glass preform flows radially outwardly from the lens chamber into the annular channel.

8. A method as recited in claim 16 wherein:
the excess glass from the glass preform flows in an axial direction away from the lens chamber into the annular channel.

9. A method as recited in claim 16 wherein:
the annular channel is located at a perimetric interface between the first and second mold sleeve segments.

10. A method as recited in claim 16 wherein:
the preform has a volume that is greater than a volume of the lens chamber but less than the volume of the mold cavity, the annular channel serving as a reservoir for excess preform glass during a molding operation.
